# FASCICULE DE BREVET EUROPEEN

(11) **EP 3 092 533 B1**
(45) Date de publication et mention de la délivrance du brevet: **02.03.2022**
(21) Numéro de dépôt: 15700425.0
(22) Date de dépôt: 06.01.2015
(51) Int. Cl.: G05B 19/4069

(54) **SYSTEMES D`USINAGE COMPORTANT UNE MACHINE D`USINAGE ET DES PROCEDES DE COMMANDE**
BEARBEITUNGSSYSTEM MIT EINER BEARBEITUNGSANLAGE UND STEUERUNGSVERFAHREN
MACHINING SYSTEMS COMPRISING A MACHINING FACILITY AND CONTROL METHODS

(30) Priorité: 06.01.2014 FR 1450052
(43) Date de publication de la demande: 16.11.2016
(73) Titulaire: Safran Landing Systems, 78140 Vélizy-Villacoublay (FR); Spring Technologies, 93100 Montreuil (FR)
(72) Inventeur: CHEBROUX, Christophe, F-78140 Velizy-Villacoublay (FR); LALLEMENT, Daniel, F-78140 Velizy-Villacoublay (FR); COMA, Olivier, F-93100 Montreuil (FR); BELATON, Olivier, F-93100 Montreuil (FR); GUENEAU, Olivier, F-93100 Montreuil (FR)
(74) Mandataire: Lavialle, Bruno François Stéphane
(86) Numéro de dépôt international: PCT/EP2015/050108
(87) Numéro de publication internationale: WO 2015/101675

(56) Documents cités:
- US-A1- 2010 063 616
- US-A1- 2012 265 330
- US-A1- 2012 290 122
- US-A1- 2012 290 122
- US-B1- 6 546 127

## Description

### ARRIERE PLAN DE L'INVENTION

L'invention concerne le domaine général des systèmes d'usinage comportant une machine d'usinage et des procédés de commande de tels systèmes d'usinage.

Il est connu des documents brevet EP 1 548 529 et US 2012/0290122 A1, un système d'usinage comportant une machine d'usinage comportant :
- au moins un outil réel pour l'usinage d'une pièce réelle ;
- une pluralité d'actionneurs agencés pour générer un déplacement relatif dudit au moins un outil réel par rapport à un brut réel à usiner pour former la pièce réelle ;
- une pluralité de capteurs pour générer des données de positionnement représentatives d'une position courante de l'outil réel par rapport à un référentiel machine réel ;
- une mémoire dans laquelle sont stockées des données de correction de la géométrie de l'outil réel ;
- un contrôleur physique agencé pour exécuter un programme d'usinage et commander aux actionneurs, conformément à des instructions contenues dans le programme d'usinage et en fonction de certaines au moins des données de correction de géométrie de l'outil réel, de déplacer dans le référentiel machine réel ledit au moins un outil réel par rapport au brut réel de manière à usiner ce brut réel pour former la pièce réelle.

Dans le premier document de l'art antérieur, il est proposé en plus une solution pour surveiller l'usinage en utilisant une caméra qui transmet des images de l'usinage qui correspondent à des instructions d'usinage en cours d'exécution par le contrôleur physique.

Du fait des nombreuses projections de matières lors de l'usinage, l'image vidéo captée par la caméra est souvent altérée et l'observation de l'usinage est rendue difficile. Le document US 6 546 127 B1 décrit un système permettant de rendre une image construite à partir des positions réelles de l'outil et de la pièce en cours d'usinage.

### OBJET DE L'INVENTION

Un objet de la présente invention est de fournir un système d'usinage permettant à l'opérateur d'observer l'usinage et minimisant les difficultés d'observation liées à des projections de matières durant l'usinage, comme des projections de fluides de refroidissement ou de copeaux.

### RESUME DE L'INVENTION

L'invention est exposée dans le jeu de revendications 1 à 12 joint.

### BREVE DESCRIPTION DES DESSINS

L'invention sera mieux comprise à la lumière de la description détaillée qui en est faite ci-après, à titre indicatif et nullement limitatif, en référence aux dessins annexés, dans lesquels:
- la figure 1 présente un schéma général d'un système d'usinage selon l'invention ;
- la figure 2 présente un schéma de fonctionnement du système d'usinage selon l'invention ;
- la figure 3a présente une vue fonctionnelle d'un contrôleur virtuel utilisé dans le système d'usinage selon l'invention ;
- la figure 3b présente une vue schématique d'image reconstituée superposant les formes représentatives du brut réel avant, après, et en cours d'usinage avec la trajectoire théorique de l'outil réel ;
- les figures 4 à 8 présentent des images reconstituées ou simulées affichées séquentiellement par les moyens d'affichage du système d'usinage selon l'invention ;
- la figure 9 présente le déroulement d'un usinage réalisé à l'aide du système d'usinage selon l'invention alors que le contrôleur physique exécute le programme d'usinage et commande l'usinage du brut réel par l'outil réel, l'image affichée étant une image simulée par le contrôleur virtuel et phasée avec l'instruction d'usinage en cours d'exécution par le contrôleur physique ;
- la figure 10 présente le déroulement d'un usinage réalisé avec le système d'usinage selon l'invention et pour lequel, au cours d'un usinage réel, une alerte de risque de défaut d'usinage de la pièce usinée a été générée par le contrôleur virtuel simulant l'usinage réel, et un ordre d'interruption d'usinage a été transmis par ce contrôleur virtuel au contrôleur physique, l'image affichée est ici une image reconstituée ;
- la figure 11 présente le déroulement d'un usinage réalisé avec le système selon l'invention alors que le contrôleur physique déplace l'outil réel en fonction d'instructions générées par une commande manuelle de déplacement d'outil actionnée par l'opérateur, l'image affichée pour l'opérateur est ici une image reconstituée.

### DESCRIPTION DETAILLEE DE L'INVENTION

Comme indiqué précédemment, il est parfois difficile/impossible pour l'opérateur d'un système d'usinage d'observer physiquement l'outil réel et le brut réel lors de l'usinage. La visibilité de l'outil réel ou du brut réel est souvent difficile du fait de la présence de systèmes de protection, par exemple des portes de sécurité ou des carters, placés entre le brut réel et l'opérateur. Pendant l'usinage, la visibilité est aussi gênée par les projections de déchets d'usinage tels que des copeaux ou des fluides de lubrification/refroidissement.

Le système d'usinage 10 conforme à l'invention décrite ci-après résout ce problème en apportant à l'utilisateur des images 25, 28 représentatives de l'usinage réel tout en lui permettant de détecter des risques de défaut d'usinage avant qu'ils n'apparaissent.

Comme on le verra par la suite, ces images 25, 28 sont principalement :
- des images dites simulées 28 générées par une simulation exécutée par un contrôleur virtuel 26 simulant le fonctionnement du contrôleur physique 18 qui commande le déplacement réel de l'outil réel 12 par rapport au brut réel 13 ; et
- des images dites reconstituées qui sont générées en prenant en compte les déplacements réels de l'outil réel 12 par rapport au brut réel 13 et les données dimensionnelles de l'outil qui sont nommées données de correction de géométrie 20 d'outil.

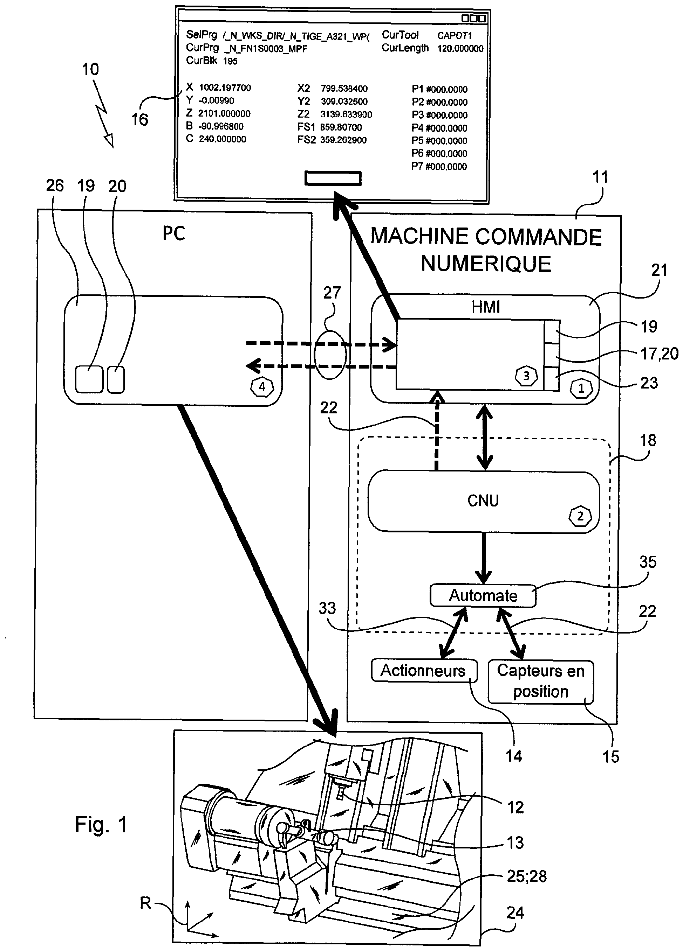

Comme représenté à la figure 1, l'invention concerne un système d'usinage 10 comportant une machine d'usinage 11. Cette machine d'usinage 11 comporte :
- au moins un outil réel 12 pour l'usinage d'une pièce réelle 13 ;
- une pluralité d'actionneurs 14 agencés pour générer un déplacement relatif dudit au moins un outil réel 12 par rapport à un brut réel 13 à usiner pour former la pièce réelle 13 ;
- une pluralité de capteurs 15 pour générer des données de positionnement 16 représentatives d'une position courante de l'outil réel 12 par rapport à un référentiel machine réel R ;
- une mémoire 17 dans laquelle sont stockées des données de correction 20 de la géométrie de l'outil réel ;
- un contrôleur physique 18 générant des commandes 33 à l'attention des actionneurs 14 en fonction d'instructions d'un programme d'usinage 19 qu'il exécute.

La machine d'usinage 11 présente une structure/architecture réelle comprenant plusieurs axes de déplacements linéaires X, Y, Z de l'outil par rapport au référentiel machine R et au moins un axe d'orientation A de l'outil 12 par rapport à ce même référentiel machine R. La machine d'usinage 11 présente aussi un axe d'orientation B pour orienter le brut réel par rapport à ce même référentiel. Ces axes X, Y, Z, A, B sont reliés à certains des actionneurs pour déplacer à l'aide de ces axes l'outil réel 12 par rapport au brut réel 13 en fonction des commandes 33 générées par le contrôleur physique 18 exécutant un programme d'usinage 19.

Lorsque le contrôleur physique 18 exécute le programme d'usinage 19, il commande le déplacement de l'outil 12 par rapport au brut réel 13 et usine ce brut 13 en fonction des instructions du programme 19 et des données de correction de géométrie 20 de l'outil 12 utilisé lors de l'usinage.

Pour obtenir une pièce réelle 13 conforme aux attentes du bureau d'étude, le contrôleur physique 18 prend en compte lors de l'exécution du programme 19, la géométrie réelle de l'outil réel 12 et utilise pour cela des données de correction 20 de la géométrie de l'outil 12. A chaque outil utilisé par la machine d'usinage 11 est associé un jeu de données de correction 20 de la géométrie de cet outil. Ces données 20 sont générées par des moyens de mesure de l'outil 12 qui peuvent être soit externes au système d'usinage 10 soit intégrés au système d'usinage 10. Les moyens de mesure opèrent, par exemple par palpage de l'outil réel ou par mesure optique, afin de déterminer le profil réel de l'outil et/ou ses dimensions réelles, telles que sa longueur ou son diamètre. On note que chaque outil réel 12 est associé à ses propres données de correction de géométrie 20.

Si dans le programme d'usinage 19 l'outil théorique est une fraise droite de longueur 150 mm et de rayon 50 mm, et si l'outil réel 12 déplacé par les actionneurs 14 d'usinage est une fraise droite de 160 mm de longueur et de 51 mm de rayon alors le contrôleur physique 18 exécutant le programme 19, commandera le déplacement de l'outil 12 conformément aux instructions du programme 19 et en prenant en compte les données de correction de géométrie 20 qui documentent les dimensions de l'outil réel 12. Dans cet exemple, pour tout usinage réalisé à l'aide de l'arrête de coupe située à 51mm de l'axe de rotation de l'outil, le contrôleur physique 18 ordonnera de reculer l'axe de rotation de l'outil de 1 mm de plus que ce qu'indique l'instruction correspondante dans le programme d'usinage 19. Cette correction est réalisée pour chaque outil réel 12 en fonction des corrections de géométrie 20 qui sont représentatives des dimensions réelles de l'outil 12 et/ou des écarts dimensionnels entre l'outil théorique et l'outil réel 12.

Le système d'usinage 10 selon l'invention comporte en outre des moyens d'information 21 de l'opérateur qui sont reliés au contrôleur physique 18 pour recevoir certaines des données représentatives 22 :
- de la position courante de l'outil réel 12 dans le référentiel réel R ; et
- de la position courante du brut réel 13 dans ce référentiel réel R.

Ces moyens d'information 21 comportent des moyens pour mémoriser 23 une succession de positions courantes de l'outil réel 12 dans le référentiel réel R et des moyens d'affichage d'images 24.

Ces moyens d'affichage 24 sont agencés pour générer et afficher au moins une image reconstituée 25 à partir desdites données représentatives des positions de l'outil réel 12 et du brut réel 13 dans ce référentiel réel R.

Cette image reconstituée 25 est représentative :
- de la forme à un instant donné t1 du brut réel 13 en cours d'usinage ; et
- de la position, à cet instant donné t1, de l'outil réel par rapport à ce brut réel.

Le système d'usinage 10 comprend en outre un contrôleur virtuel 26 relié audit contrôleur physique 18 par des moyens de communication 27 entre ces contrôleurs 18, 26.

Ce contrôleur virtuel 26 est un logiciel de simulation exécuté par un calculateur réel externe à la machine d'usinage 11 et distinct de cette dernière. Ce calculateur externe peut être intégré dans un ordinateur externe à la machine d'usinage 11 et doté de moyens d'interface homme/machine comprenant un écran d'affichage également distinct de la machine d'usinage 11.

Le contrôleur physique 18 appartient à la machine d'usinage 11, il est préférentiellement disposé à l'intérieur d'une armoire de commande appartenant à cette machine 11. Le contrôleur virtuel 26 externe à la machine d'usinage 11 est par conséquent disposé à l'extérieur de l'armoire de commande. Les moyens de communication 27 entre ces contrôleurs physique 18 et virtuel 26 comportent :
- une première carte de communication réseau disposée à l'extérieur de l'armoire de commande et reliée au calculateur externe 26 ; et
- une seconde carte de communication réseau reliée à un calculateur numérique CNU du contrôleur physique 28 ; et
- des dispositifs de communication entre ces première et seconde cartes tels que des câbles de réseau et/ou des antennes de communication.

Idéalement, la communication entre ces cartes de communication est réalisée via un réseau IP (acronyme de Protocole Internet).

Le contrôleur physique 18 comporte le calculateur numérique aussi nommé CNU et un automate 35. Ce calculateur numérique CNU est agencé pour exécuter le programme d'usinage 19 et transmettre à l'automate 35 des instructions fonction de l'exécution du programme d'usinage 19.

A son tour, en fonction des données transmises par les capteurs 15 et éventuellement par les actionneurs 14, l'automate 35 exécute les instructions transmises par le calculateur numérique CNU et commande, via des commandes 33, aux actionneurs 14 de déplacer l'outil 12 par rapport au brut réel 13 pour atteindre une position relative de l'outil par rapport au brut définie dans ces instructions.

L'automate 35 reçoit des instructions successives définissant une série de positions relatives à atteindre successivement pour réaliser l'usinage du brut réel. L'automate 35 exécute un algorithme de contrôle qui lui permet de choisir parmi une pluralité de trajectoires possibles la trajectoire de déplacement relative de l'outil par rapport au brut qui doit être exécutée.

Le contrôleur virtuel 26 a ici la forme d'un algorithme fonctionnant sur un ordinateur, ici un PC. Le contrôleur virtuel 26 est agencé pour simuler le fonctionnement du contrôleur physique 18 exécutant ledit programme d'usinage 19. Cette simulation doit reproduire aussi fidèlement que possible le fonctionnement du calculateur physique 18, c'est-à-dire de la CNU et de l'automate 35 pour la génération des trajectoires. Cette simulation prend en compte le programme d'usinage 19 et les données de correction 20 de géométrie de l'outil 12 également utilisées par le contrôleur physique 18.

Les moyens d'information 21 de l'opérateur sont également reliés au contrôleur virtuel 26 et sont agencés pour transmettre à l'opérateur des informations issues de la simulation du fonctionnement du contrôleur physique 18 par le contrôleur virtuel 26.

Ces moyens d'affichage d'images 24 génèrent à partir des informations issues de la simulation, une image dite simulée 28 distincte de l'image reconstituée 25. Cette image simulée 28 est représentative :
- de la forme à un instant donné du brut réel en cours d'usinage ; et
- de la position, à cet instant donné, de l'outil réel par rapport à ce brut réel.

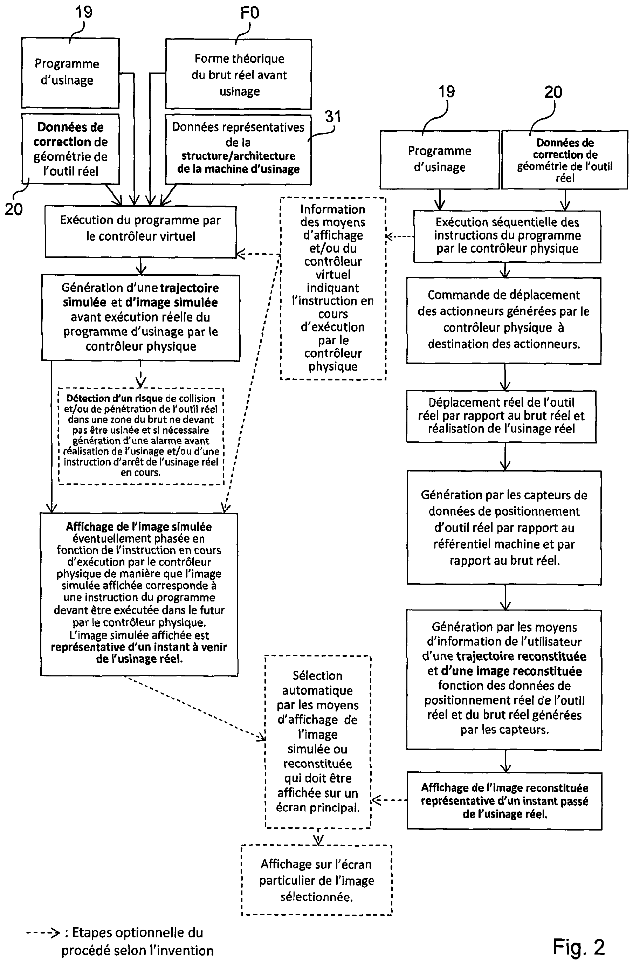

Idéalement, pour la génération de cette image simulée 28, les moyens d'affichage 24 utilisent des données prédéterminées 31 représentatives de la structure de la machine d'usinage. Comme on le voit sur la figure 2, ces données 31 sont utilisées pour l'exécution du programme 19 par le contrôleur virtuel 26.

Des exemples d'images reconstituées 25 ou simulées 28 sont donnés sur les figures 1, 3b, 5, 4, 6, 7, 8, où l'on voit une représentation de la machine d'usinage avec une tête d'usinage portant l'outil 12 mobile selon trois axes de translation X, Y, Z et selon un axe d'orientation A. La pièce 13 est nommée brut réel 13 tant que l'usinage est en cours. Cette pièce 13 est montée mobile à l'aide d'un mandrin orienté selon un axe d'orientation B par rapport au référentiel R. La machine d'usinage de l'exemple est une machine 5 axes. On note que l'outil 12 est ici une fraise qui est entrainée en rotation autour de son axe de révolution propre pour pouvoir couper des portions du brut réel 13 se trouvant sur la trajectoire réelle de l'outil.

Pour la compréhension de l'invention, on note que la différence essentielle entre une image simulée 28 et une image reconstituée 25 réside dans la manière dont sont générées ces images toutes deux représentatives de l'usinage.

Dans le cas d'une image reconstituée 25, on génère l'image à partir des déplacements réels mesurés, par les capteurs 15, de l'outil réel 12 par rapport au brut réel 13. Dans le cas de l'image simulée, on ne prend pas en compte la mesure d'éventuels déplacements réels de l'outil réel par rapport au brut réel, mais on prend en compte le résultat d'une exécution du programme d'usinage 19 par le contrôleur virtuel 26 alors que ce contrôleur virtuel 26 utilise des données de correction d'outil 20 de l'outil réel 12.

### GENERATION D'UNE IMAGE RECONSTITUEE OU D'UNE IMAGE SIMULEE :

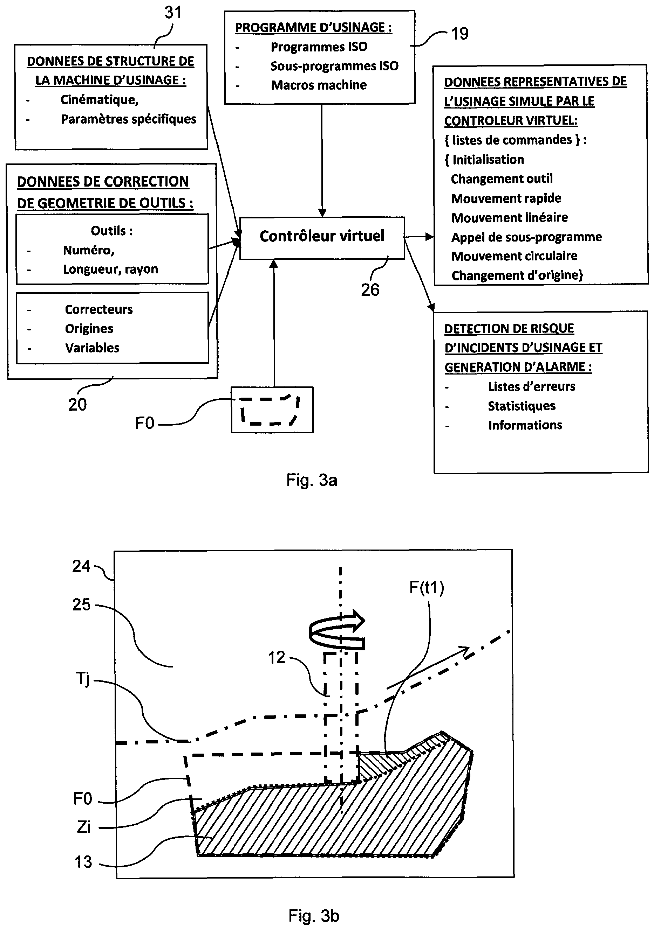

Comme on le voit en particulier sur la figure 3b, l'image reconstituée 28 est générée par les moyens d'affichage 24 en utilisant :
- une forme théorique F0 de brut 13 avant usinage, cette forme théorique est générée par les logiciels de fabrication assistée par ordinateur et est représentative de la forme réelle du brut réel 13 avant usinage ;
- une forme théorique de l'outil réel 12 déterminée au moins à partir des données de correction de géométrie 20 de l'outil 12 également utilisées par le contrôleur physique 18 lors de l'exécution dudit programme d'usinage 19, cette forme théorique de l'outil réel 12 étant au moins partiellement représentative de la forme réelle de l'outil réel 12 ; et
- une trajectoire théorique Tj reconstituée représentative du déplacement de l'outil réel 12 par rapport au brut réel 13. Cette trajectoire théorique Tj reconstituée est calculée à l'aide de ladite succession de positions courantes de l'outil réel 12 dans le référentiel réel R déterminée à partir des données de positionnement générées par les capteurs 15.

Plus précisément, comme schématisé à la figure 3b, l'image reconstituée 25 est générée par les moyens d'affichage 24 :
- en déterminant des zones de la forme théorique F0 du brut 13 avant usinage qui se sont trouvées, jusqu'à cet instant donné t1 de l'usinage, sur la trajectoire théorique reconstituée Tj de déplacement de l'outil réel 12, ces zones étant nommées zones d'intersection Zi ; et
- en retirant de la forme théorique F0 du brut avant usinage, toutes ces zones d'intersection Zi de manière que l'image reconstituée 25 ainsi générée soit représentative de la forme du brut réel 13 à l'instant donné de l'usinage t1.

Grâce à l'invention, l'opérateur est capable de visualiser sur une même image 25, dite image reconstituée :
- une représentation du brut réel en cours d'usinage 13; et
- une représentation de la forme théorique de l'outil réel 12 dans la position théorique qu'elle occupait par rapport au brut réel 13 à un instant donné t1 passé de l'usinage ; et éventuellement
- la forme de la pièce théorique attendue en fin d'usinage et/ou la forme théorique F0 du brut avant usinage.

Comme cette visualisation 25 est générée à l'aide de données de positionnement réelles fournies par des capteurs 15 de la machine d'usinage 11, elle est nécessairement en retard par rapport à l'usinage réel en cours ou passé.

Ce retard est lié au temps nécessaire aux capteurs 15 pour transmettre les données de position et au temps nécessaire pour que les moyens d'affichage 24 réalisent l'affichage de l'outil 12 et du brut 13 tels qu'ils étaient respectivement positionnés dans le référentiel machine R au moment où les capteurs 15 détectaient ces positions respectives. En pratique, ce temps de retard reste tolérable car il peut être relativement faible. L'image reconstituée 25 permet à l'opérateur, d'avoir une représentation relativement fidèle et approchante de l'opération d'usinage telle qu'elle s'est réellement passée.

Idéalement les moyens d'affichage d'images 24, reconstituée ou simulée, sont agencés pour générer une animation visuelle représentative d'une partie au moins de l'usinage et l'image affichée est extraite de cette animation.

Pour permettre à l'opérateur de naviguer aisément dans l'animation générée par les moyens d'affichage, le système peut comporter des moyens de sélection d'un point de vue utilisé pour générer l'image affichée. Grâce à ces moyens de sélection l'opérateur peut sélectionner le type de représentation devant être utilisé pour générer l'image affichée parmi :
- une représentation en perspective ; et/ou
- une représentation en coupe selon un plan de coupe choisi par l'opérateur ; et/ou
- une représentation comprenant une image de l'outil réel positionné par rapport au brut réel en cours d'usinage ; et/ou
- une représentation comprenant une image de l'outil réel positionné par rapport au brut réel en cours d'usinage et par rapport à un environnement machine autour de cet outil 12 et du brut 13.

Toujours dans un but d'amélioration de l'ergonomie, le système peut comporter des moyens pour permettre à l'opérateur de sélectionner l'instant donné t1 de l'usinage réel pour lequel il souhaite obtenir une image reconstituée 25 ou une image simulée 28 représentative de cet usinage à cet instant donné t1.

En réponse à la sélection par l'opérateur de l'instant donné d'usinage t1 à afficher, les moyens d'affichage génèrent une image reconstituée 25 représentative de l'usinage réel tel qu'il était à l'instant donné sélectionné.

L'opérateur peut ainsi visualiser autant de fois qu'il le souhaite, le déroulement d'un usinage passé. Ceci permet notamment de savoir pour quelle raison une pièce usinée 13 présente une forme particulière ou un défaut particulier. Il est alors possible d'identifier, a posteriori, l'instruction du programme d'usinage 19 qui a été exécutée et qui est responsable de ce défaut particulier. Le programme d'usinage 19 et/ou l'outil réel 12 peuvent alors être modifiés pour éviter que le défaut ne se reproduise lors d'un usinage à venir.

Par rapport à l'image simulée, l'image reconstituée 25 présente l'avantage d'être plus représentative de l'usinage réel car elle prend en compte les positions réellement mesurées par les capteurs 15 et les correcteurs de géométrie 20 d'outil(s) réellement utilisés par le contrôleur physique. Cette précision est essentiellement due à l'écart qui existe entre une instruction de déplacement de l'outil 12 selon une trajectoire donnée dans le programme 19 et la trajectoire réelle de déplacement de l'outil 12 exécutée par la machine 11. Comme la machine réelle comporte une pluralité d'actionneurs 14 et d'axes X, Y, Z, A, B pour commander les déplacements de l'outil réel 12 par rapport au brut réel 13, le contrôleur physique 18 exécutant une instruction du programme d'usinage 19, doit identifier la combinaison de commandes 33 à donner aux différents actionneurs 14 pour que l'outil réel 12 se déplace selon une trajectoire réelle aussi approchante que possible de la trajectoire prévue par l'instruction exécutée du programme 19. La manière dont chaque contrôleur physique 18 choisi cette combinaison de commandes 33 à donner aux actionneurs 14 est variable d'un contrôleur physique 18 à un autre. Comme un contrôleur virtuel 26 présente un écart de fonctionnement par rapport au contrôleur physique 18 qu'il simule, on constate que pour une même instruction exécutée, les contrôleurs virtuels 26 et physique 18 peuvent respectivement générer une trajectoire simulée différente de la trajectoire réelle. Cette différence entre trajectoires est généralement inférieure à 0.1mm d'écart entre trajectoires et n'invalide pas la simulation basée sur le contrôleur virtuel pour ce qui concerne la détection d'alertes en avance de phase.

Grâce à la génération de la trajectoire reconstituée Tj et de l'image reconstituée 25, l'invention permet une vision plus précise de la trajectoire réellement suivie par l'outil réel que si l'on visualisait uniquement une trajectoire simulée par le contrôleur virtuel.

Ainsi, selon l'invention, lorsque l'on privilégie une précision dimensionnelle de la visualisation, alors on choisit l'affichage d'une image reconstituée 25 plutôt que l'affichage d'une image simulée 28.

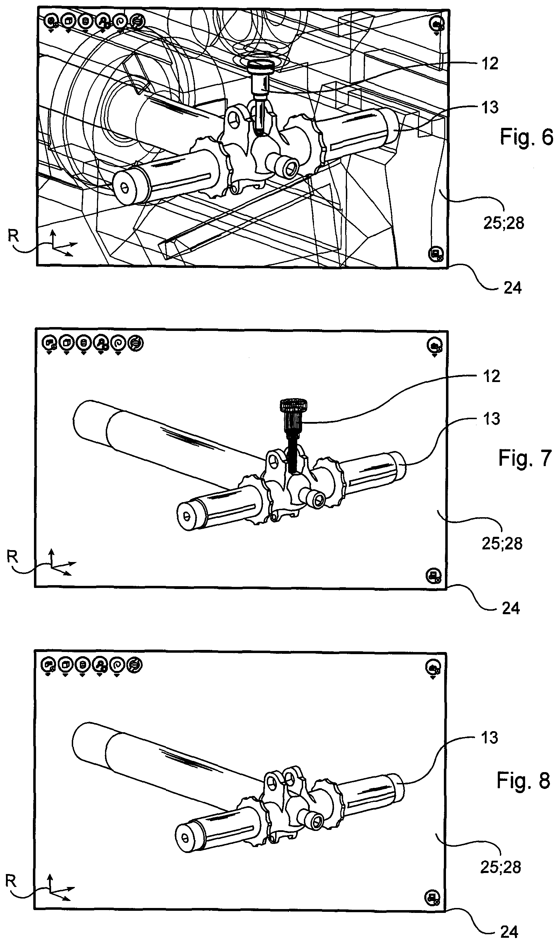

Comme on le constate aux figures 2 et 6, l'affichage de l'image reconstituée 25 est privilégié lorsque l'opérateur commande manuellement le déplacement relatif de l'outil réel par rapport au brut réel pour par exemple dégager l'outil du brut en évitant autant que possible que l'outil n'entre en collision avec ce brut réel 13.

Pour la compréhension de l'invention, par commande manuelle, il faut comprendre que le contrôleur physique 18 a interrompu l'exécution du programme d'usinage 19 et qu'il exécute alors uniquement les instructions de déplacement relatif de l'outil réel 12 par rapport au brut réel 13 en fonction des commandes manuelles données par l'opérateur via les moyens de commande manuelle.

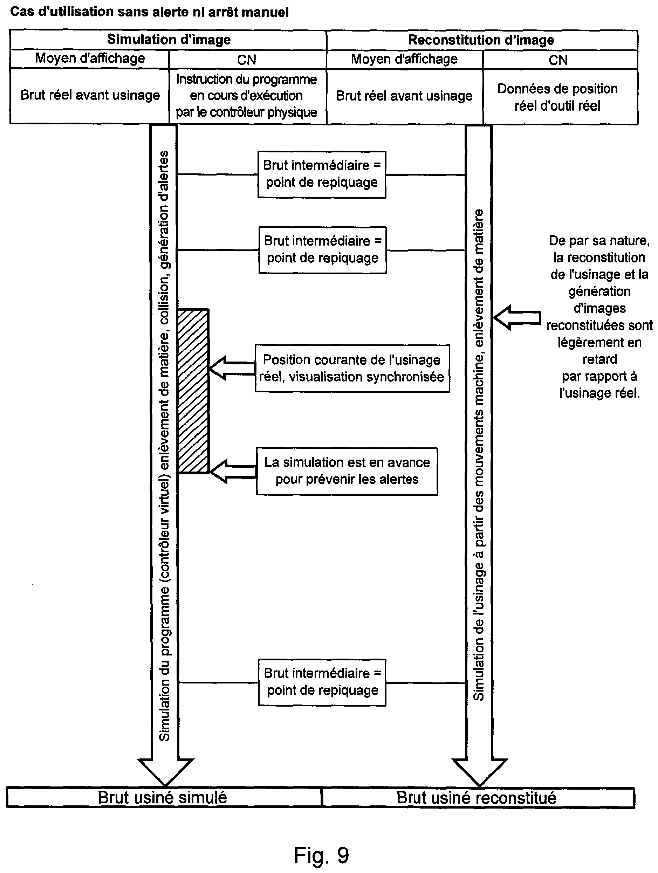

Un inconvénient de l'observation de l'usinage à l'aide de l'image reconstituée 25 est qu'elle est forcément visible a posteriori, après que l'outil réel 12 se soit réellement déplacé par rapport au référentiel machine R et au brut réel 13. Cette vision, a posteriori, ne permet pas d'anticiper ce qui va se produire lors d'un prochain déplacement de l'outil réel par rapport au brut réel. Cet inconvénient est en partie résolu grâce à l'usage de l'image simulée 28 selon l'invention. Comme on le constate sur les figures 2 et 9, cette image simulée 28 est générée non pas à l'aide des données de positionnement générées par les capteurs 15, mais à l'aide :
- du programme d'usinage 19 exécuté par le contrôleur virtuel 26 ; et
- de données de correction 20 de la géométrie de l'outil réel 12 qui devraient être réellement utilisées par le contrôleur physique 18 de la machine 11 lors de l'exécution à venir du programme d'usinage 19 par ce contrôleur physique 18.

Pour générer cette image simulée 28, le contrôleur virtuel 26 exécute les instructions du programme d'usinage 19 avant que le contrôleur physique 18 ne les exécute.

Le fait d'utiliser pour cette simulation les données de correction de la géométrie 20 de l'outil réel 12 permet d'avoir une simulation d'usinage juste avant l'usinage réel prenant en compte les spécificités dimensionnelles réelles de l'outil 12. Ainsi, contrairement à une simulation classique d'usinage réalisée par un programme de Fabrication Assistée par Ordinateur, où l'on prend en compte un outil théorique, sans tenir compte des corrections de géométrie de l'outil réel 12, et sans simuler le fonctionnement du contrôleur physique 18, on peut détecter certains défauts d'usinage qui n'auraient pas été détectés par le programme de FAO utilisant un outil virtuel de géométrie virtuelle forcément différente de la géométrie réelle de l'outil réel. Par exemple, si l'opérateur positionnait un autre outil réel 12 que celui qu'il est sensé positionner dans la machine d'usinage 11, on pourrait alors observer un défaut d'usinage. Toutefois, comme les dimensions de l'outil réel 12 sont prises en compte par le contrôleur virtuel 26 pour la génération de l'image simulée, il est alors possible que l'opérateur s'aperçoive, en visualisant l'image simulée 28, que l'usinage à venir présentera un défaut par rapport à l'usinage attendu. Ainsi, l'utilisateur peut prévoir des défauts d'usinage avant qu'ils n'apparaissent réellement.

Conformément aux modes de réalisation de l'invention décrite aux figures 2, 3a et 10, une détection automatique des risques d'incidents d'usinage et une génération d'alarme est réalisée, préalablement à l'usinage, à l'aide de la trajectoire simulée et des images simulées 28.

Pour cela, le système 10 selon l'invention comporte des moyens de génération d'une alarme en cas :
- de pénétration de la trajectoire reconstituée de l'outil réel dans une zone limite prédéterminée s'étendant autour d'une surface virtuelle représentative de la pièce réelle que l'on souhaite obtenir en fin d'usinage ; et/ou
- de détection d'un incident d'usinage tel qu'une détection de casse de l'outil réel, de vibrations anormales d'un élément du système d'usinage, de déplacement de l'outil réel en dehors d'un espace prédéterminé de présence autorisé de l'outil réel, de détection d'une ouverture d'une porte de sécurité de la machine d'usinage ; et/ou
- de détection d'un ordre d'arrêt d'usinage donné par l'opérateur via une commande manuelle.

En l'absence de détection d'une alarme pendant le déroulement de l'usinage, les moyens d'affichage 24 affichent l'image simulée 28 phasée à l'aide de moyens pour phaser l'image simulée affichée en fonction de l'instruction du programme 19 en cours d'exécution par le contrôleur physique 18.

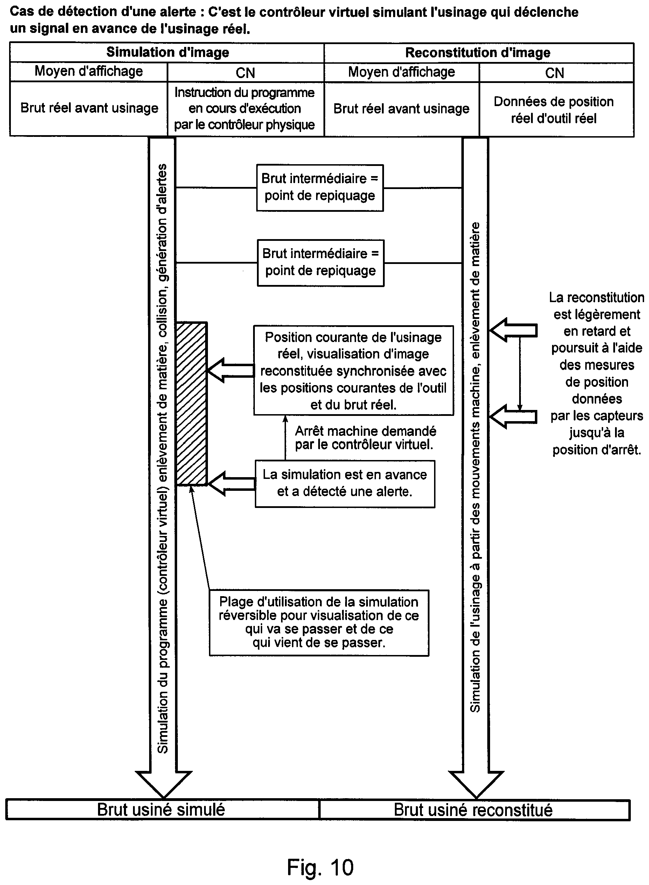

Les moyens d'information sont agencés pour afficher l'image reconstituée 25 en réponse à la génération d'une alarme pendant le déroulement de l'usinage. Ces moyens d'information 21 autorisent également l'opérateur à passer dans un mode de commande manuelle dans lequel il commande aux actionneurs 15 de déplacer l'outil réel par rapport au brut réel à l'aide de moyens de commande manuelle. De tels moyens de commande manuelle peuvent comporter une manette de commande et/ou des touches de commande, et/ou un écran tactile. Comme on le voit sur la figure 10, l'image reconstituée 25 affichée en cas d'alarme est préférentiellement représentative :
- de la forme du brut réel 13 en cours d'usinage à l'instant où l'opérateur commande manuellement le déplacement de l'outil réel ; et
- de la position de l'outil réel 12 par rapport au brut réel à ce même instant.

Comme on le voit sur la figure 10, en cas d'alarme, l'image affichée est une image reconstituée 25 synchronisée avec l'usinage réel courant, c'est-à-dire avec les positions relatives outil / brut courantes mesurées par les capteurs 15.

### PROCEDURE DE REPIQUAGE APRES UNE INTERRUPTION D'USINAGE :

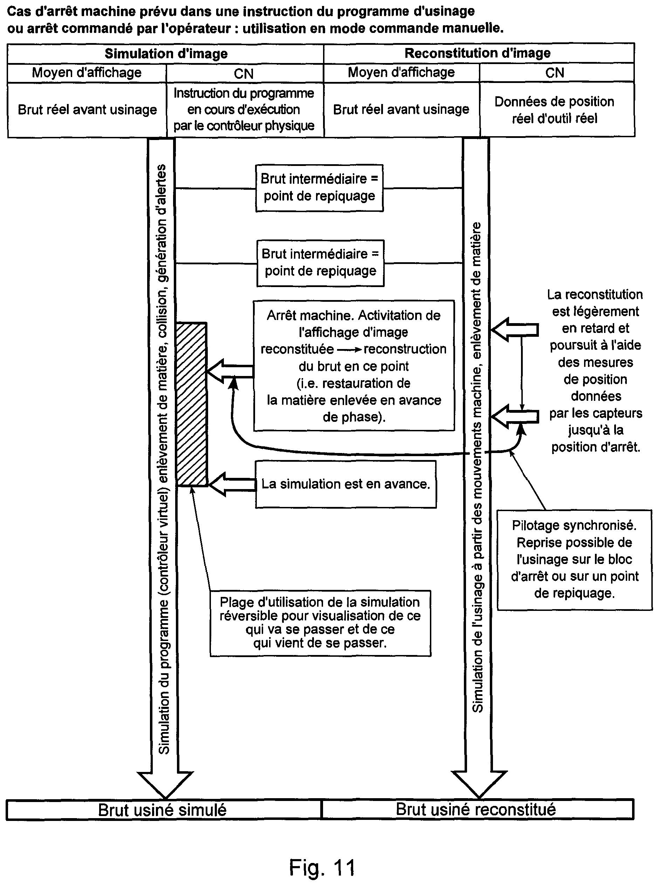

Comme illustré en référence aux figures 9, 10, 11, le programme d'usinage 19 comporte des marqueurs qui désignent des points de repiquage à partir desquels on peut positionner l'outil réel si l'on souhaite reprendre le cours de l'usinage après une interruption d'usinage. Généralement, les points de repiquage impliquent un positionnement de l'outil réel 12 à distance du brut réel 13. Ainsi, comme indiqué aux figures 2 et 11, en cas d'interruption de l'usinage réel, la machine d'usinage 11 passe en mode de commande manuelle. Les moyens d'affichage 24 affichent alors sur un écran particulier des moyens d'affichage 24, l'image reconstituée 25 générée selon un point de vue éventuellement choisi par l'opérateur. L'opérateur peut alors commander manuellement le dégagement de l'outil réel vis-à-vis du brut réel en s'aidant de l'image reconstituée affichée 25. Pendant la commande manuelle les moyens d'affichage autorisent l'opérateur à grossir des zones d'image reconstituée sélectionnée et/ou à changer de point de vue et/ou le plan de section. Les moyens d'affichage 24 permettent à l'opérateur de choisir parmi une pluralité de vues disponibles reconstituées celle qu'il préfère pour visualiser une position relative de l'outil réel par rapport au brut réel à un instant donné t1.

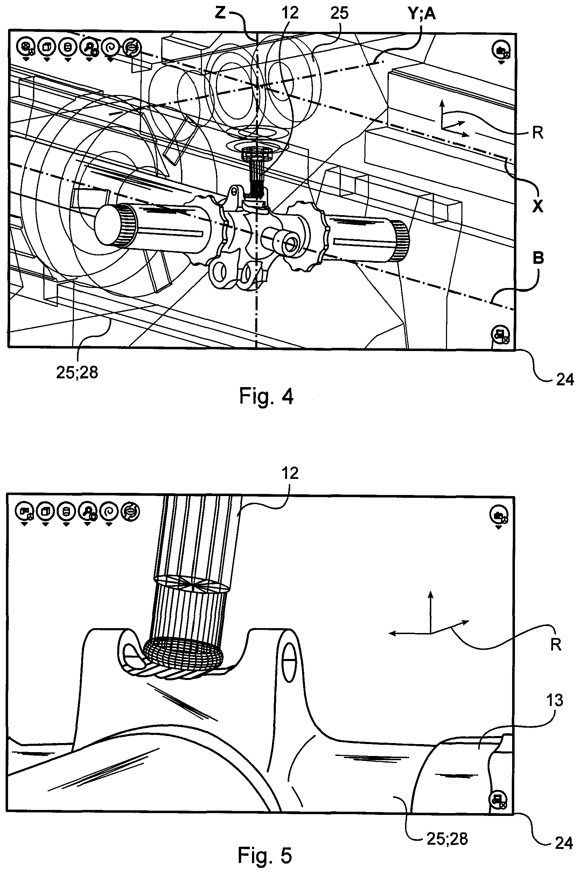

Les figures 4 et 5 donnent deux images affichées chacune représentatives d'une même position relative de l'outil réel par rapport au brut réel. Dans l'image de la figure 4, les moyens d'affichage 24 présentent une vue générale représentative de l'outil réel 12, du brut réel 13 et de l'environnement machine (montages d'usinages, la structure de la machine réelle et axes machine).

Sur la figure 5, les moyens d'affichage génèrent une image centrée autour de la zone de contact entre l'outil réel 12 et le brut 13 en cours d'usinage. Sur cette figure, on ne voit plus l'environnement machine qui a été volontairement supprimé de l'image par choix de l'opérateur.

Les figures 6, 7 et 8 présentent des images 25, 28 affichées par les moyens d'affichage 24 toutes représentatives d'un même instant d'usinage t1 qui peut être soit passé (dans ce cas, l'image affichée est une image reconstituée de l'usinage passé), soit un instant présent de l'usinage en cours (dans ce cas l'image est soit une image simulée, soit une image reconstituée), soit un instant à venir (dans ce cas l'image affichée est forcément une image simulée). Sur la figure 6, on voit l'outil 12, le brut 13 et l'environnement machine. Sur la figure 7, on voit uniquement le brut et l'outil, sans l'environnement machine. Sur la figure 8, on voit uniquement le brut, sans l'outil, cette figure permet de bien visualiser la forme courante du brut sans que l'outil ne cache une portion du brut.

Lorsqu'il l'estime possible, l'opérateur peut commander la reprise de l'usinage et le contrôleur physique 18 reprend alors l'exécution du programme d'usinage au point de repiquage déterminé dans le programme d'usinage 19.

Le programme d'usinage 19 peut comporter des instructions/routines pour détecter le point de repiquage à partir duquel faire reprendre l'usinage après interruption. Le contrôleur physique commande alors le déplacement de l'outil réel par rapport au brut réel depuis le point de dégagement où l'opérateur a laissé l'outil après l'avoir dégagé en mode commande manuelle. Pour ce déplacement du point de dégagement vers le point de repiquage, le contrôleur physique 18 peut utiliser l'image reconstituée du brut réel et/ou l'image simulée du brut réel et/ou des données représentative à la forme du brut réel avant le début d'usinage et/ou des données représentatives de l'environnement outil pour déterminer la trajectoire que doit suivre l'outil réel 12 pour se déplacer vers le point de repiquage.

On note que les points de repiquages sont prédéterminés dans le programme d'usinage de manière à ce que l'usinage puisse reprendre en limitant le risque de générer des défauts.

En résumé, grâce à l'invention, l'opérateur peut visualiser l'usinage en cours sans avoir à observer physiquement la pièce réelle ou l'outil réel. Cette visualisation est soit réalisée à l'aide d'une image reconstituée 25, soit à l'aide d'une image simulée 28.

L'image reconstituée 25 est calculée en prenant en compte les déplacements réels de l'outil réel et la géométrie réelle de l'outil grâce aux données de correction de géométrie 20. Son avantage principal est d'être proche de la réalité de l'usinage passé, mais son inconvénient est de constater un état passé de l'usinage. Cette image reconstituée est utilisée en cas de génération d'une alarme, comme sur le mode de la figure 10, ou en cas de commande manuelle par l'opérateur, comme sur le mode de la figure 11. Elle permet de voir un positionnement courant (avec un léger décalage temporel) ou passé (dans le cas d'un usinage passé dont on a enregistré les données réelles d'usinage) de l'outil réel par rapport au brut réel et un état de la forme du brut.

L'image simulée 28 est moins fidèle à la réalité géométrique de l'usinage que ne l'est l'image reconstituée 25, mais elle permet d'avoir une vision de l'usinage a priori, soit au cours de l'usinage, soit bien avant que cet usinage ne se débute. Dans le cas de la figue 9, l'image simulée 28 est phasée avec l'instruction d'usinage en cours d'exécution par le contrôleur physique pour que l'opérateur sache avec quelques instructions d'avance ce qui va se passer.

Idéalement, les moyens d'affichage comportent un écran d'affichage principal 24 et éventuellement des écrans secondaires. Des moyens de sélection de ces moyens d'affichage sont agencés pour sélectionner parmi l'image reconstituée 25 ou l'image simulée 28, l'image qui doit être affichée sur l'écran principal. L'image reconstituée étant sélectionnée automatiquement lorsque l'opérateur commande manuellement le déplacement de l'outil réel et l'image simulée étant sélectionnée automatiquement lorsque le déplacement relatif de l'outil réel par rapport au brut réel est commandé par le contrôleur physique 18 exécutant le programme d'usinage 19.

La présente invention a été décrite en référence à un outil réel 12, mais elle comprend aussi le cas où plusieurs outils réels seraient utilisés par la machine d'usinage afin d'usiner une ou plusieurs pièces réelles en même temps. Dans le cas où l'on aurait plusieurs outils réels, les moyens d'affichage prennent en compte les formes et trajectoires individuelles des outils réels par rapport au(x) brut(s) théorique(s) pour déterminer au moins une image représentative de la forme courante du/des brut(s) en cours d'usinage.

De même, l'invention concerne également un procédé de commande d'un système d'usinage conforme à l'un quelconque des modes de réalisation décrits précédemment ou revendiqués.

## Revendications

1. Système d'usinage (10) comportant une machine d'usinage (11) comportant :
- au moins un outil réel (12) pour l'usinage d'une pièce réelle (13);
- une pluralité d'actionneurs (14) agencés pour générer un déplacement relatif dudit au moins un outil réel (12) par rapport à un brut réel (13) à usiner pour former la pièce réelle (13);
- une pluralité de capteurs (15) pour générer des données de positionnement (16) représentatives d'une position courante de l'outil réel (12) par rapport à un référentiel machine réel (R);
- une mémoire (17) dans laquelle sont stockées des données de correction de la géométrie (20) de l'outil réel (12) ;
- un contrôleur physique (18) agencé pour exécuter un programme d'usinage (19) et commander aux actionneurs (14), conformément à des instructions contenues dans le programme d'usinage (19) et en fonction de certaines au moins des données de correction de géométrie (20) de l'outil réel (12), de déplacer dans le référentiel (R) machine réel ledit au moins un outil réel (12) par rapport au brut réel (13) de manière à usiner ce brut réel (13) pour former la pièce réelle (13), le système d'usinage comprenant des moyens d'information de l'opérateur (21) reliés au contrôleur physique (18) pour recevoir certaines des données (22) représentatives :
- de la position courante de l'outil réel (12) dans le référentiel réel (R) ; et
- de la position courante du brut réel (13) dans ce référentiel réel (R) ;
ces moyens d'information (21) comportent en outre des moyens pour mémoriser (23) une succession de positions courantes de l'outil réel (12) dans le référentiel réel (R) et des moyens d'affichage d'images (24), **caractérisé en ce que** ces moyens d'affichage (24) sont agencés pour générer et afficher au moins une image reconstituée (25) à partir desdites données (22) représentatives des positions de l'outil réel (12) et du brut réel (13) dans ce référentiel réel (R), cette image reconstituée (25) étant représentative :
- de la forme à un instant donné du brut réel (13) en cours d'usinage ; et
- de la position, à cet instant donné, de l'outil réel (12) par rapport à ce brut réel (13) ;
le système d'usinage (10) comportant en outre des moyens de génération d'une alarme en cas de pénétration d'une trajectoire théorique reconstituée (Tj) de l'outil réel (12) dans une zone limite prédéterminée s'étendant autour d'une surface virtuelle représentative de la pièce réelle que l'on souhaite obtenir en fin d'usinage, cette trajectoire théorique (Tj) reconstituée étant calculée à l'aide de ladite succession de positions courantes de l'outil réel (12) dans le référentiel réel (R).

2. Système d'usinage (10) selon la revendication 1, dans lequel le système d'usinage (10) comprend en outre :
- un contrôleur virtuel (26) relié audit contrôleur physique (18) par des moyens de communication (27) entre ces contrôleurs (18, 26), le contrôleur virtuel (26) étant agencé pour simuler le fonctionnement du contrôleur physique (18) exécutant ledit programme d'usinage (19), cette simulation prenant en compte ledit programme d'usinage (19) et les données de correction de géométrie (20) de l'outil également utilisées par le contrôleur physique (18) lors de l'exécution dudit programme d'usinage (19) par le contrôleur physique (18) ;
- les moyens d'information de l'opérateur (21) sont également reliés au contrôleur virtuel (26) et agencés pour transmettre à l'opérateur des informations issues de la simulation du fonctionnement du contrôleur physique par le contrôleur virtuel (26), lesdits moyens d'affichage d'images (24) étant en outre agencés pour générer à partir des informations issues de la simulation, une image dite simulée (28) distincte de l'image reconstituée (25), cette image simulée (28) étant également représentative :
- de la forme à un instant donné du brut réel (13) en cours d'usinage ; et
- de la position, à cet instant donné, de l'outil réel (12) par rapport à ce brut réel (13).

3. Système selon l'une quelconque des revendications 1 ou 2, dans lequel les moyens d'affichage (24) sont en outre agencés pour générer l'image reconstituée (25) en utilisant :
- une forme théorique de brut avant usinage, cette forme théorique étant représentative de la forme réelle du brut réel (13) avant usinage ;
- une forme théorique (F0) de l'outil réel (12) déterminée au moins à partir des données de correction de géométrie (20) de l'outil également utilisées par le contrôleur physique (18) lors de l'exécution dudit programme d'usinage (19) par le contrôleur physique (18), cette forme théorique de l'outil réel (12) étant au moins partiellement représentative de la forme réelle de l'outil réel (12) ; et
- ladite trajectoire théorique (Tj) reconstituée.

4. Système (10) selon la revendication 3, dans lequel les moyens d'affichage (24) sont agencés pour générer ladite image reconstituée (25) représentative de la forme à un instant donné du brut réel (13) :
- en déterminant des zones (Zi) de la forme théorique du brut avant usinage (F0) qui se sont trouvées, jusqu'à cet instant donné (t1) de l'usinage, sur la trajectoire théorique reconstituée (Tj) de déplacement de l'outil réel (12), ces zones (Zi) étant nommées zones d'intersection (Zi) ; et
- en retirant de la forme théorique du brut avant usinage (F0), toutes ces zones d'intersection (Zi) de manière que l'image reconstituée (25) ainsi générée soit représentative de la forme du brut réel (13) à l'instant donné (t1) de l'usinage.

5. Système selon l'une quelconque des revendications 1 à 4, dans lequel le système (10) présente des moyens permettant à l'utilisateur de sélectionner ledit instant donné (t1) de l'usinage réel pour lequel il souhaite obtenir une image reconstituée (25) représentative de cet usinage audit instant donné sélectionné passé.

6. Système selon l'une quelconque des revendications 1 à 5, dans lequel les moyens d'affichage (24) d'image sont agencés pour générer une animation visuelle représentative d'une partie au moins de l'usinage et ladite image affichée (25, 28) étant extraite de cette animation.

7. Système selon l'une quelconque des revendications 1 à 6, dans lequel le système (10) comporte des moyens de sélection d'un point de vue utilisé pour générer l'image affichée (25 28), ces moyens de sélection étant en outre agencés pour sélectionner le type de représentation devant être utilisé pour générer l'image affichée parmi :
- une représentation en perspective ; et/ou
- une représentation en coupe selon un plan de coupe choisi par l'opérateur ; et/ou
- une représentation comprenant une image de l'outil réel positionné par rapport au brut réel (13) en cours d'usinage ; et/ou
- une représentation comprenant une image de l'outil réel positionné par rapport au brut réel en cours d'usinage et par rapport à un environnement machine autour de cet outil et du brut.

8. Système selon l'une quelconque des revendications précédentes combinée à la revendication 2, dans lequel les moyens d'information (21) de l'opérateur comportent des moyens pour phaser l'image simulée affichée (28) en fonction de l'instruction du programme d'usinage (19) qui est en cours d'exécution par le contrôleur physique (18), ces moyens pour phaser étant agencés pour que l'image simulée affichée (28) soit représentative d'une opération d'usinage du brut réel (13) qui devrait être réalisée par l'outil réel (12) en réponse à l'exécution par le contrôleur physique (18) d'une instruction devant être exécutée à l'avenir par ce contrôleur physique (18).

9. Système selon l'une quelconque des revendications 1 à 8, dans lequel lesdits moyens de génération d'une alarme sont également agencés pour générer l'alarme en cas :
- de détection d'un incident d'usinage tel qu'une détection de casse de l'outil réel (12), de vibrations anormales d'un élément du système d'usinage (10), de déplacement de l'outil réel (12) en dehors d'un espace prédéterminé de présence autorisé de l'outil réel, de détection d'une ouverture d'une porte de sécurité de la machine d'usinage ; et/ou
- de détection d'un ordre d'arrêt d'usinage donné par l'opérateur via une commande manuelle.

10. Système selon les revendications 8 et 9, dans lequel en l'absence de génération d'une alarme pendant le déroulement de l'usinage, les moyens d'affichage (24) affichent l'image simulée (28) phasée à l'aide desdits moyens pour phaser l'image simulée affichée en fonction de l'instruction du programme d'usinage (19) qui est en cours d'exécution par le contrôleur physique (18).

11. Système selon la revendication 10, dans lequel les moyens d'information (21) sont agencés pour afficher l'image reconstituée (25) dès lors qu'une alarme est générée pendant le déroulement de l'usinage, et pour autoriser l'opérateur à passer dans un mode de commande manuelle dans lequel il commande aux actionneurs (14) de déplacer l'outil réel (12) par rapport au brut réel (13) à l'aide de moyens de commande manuelle tels qu'une manette de commande et/ou des touches de commande, l'image reconstituée affichée (25) étant représentative :
- de la forme du brut réel (13) en cours d'usinage à l'instant où l'opérateur commande manuellement le déplacement de l'outil réel par rapport au brut réel ; et
- de la position de l'outil réel par rapport à ce brut réel à ce même instant.

12. Système selon l'une quelconque des revendications précédentes combinées à la revendication 2, dans lequel les moyens d'affichage (24) sont en outre agencés pour générer l'image simulée (28) en utilisant :
- une forme théorique (F0) de brut avant usinage, cette forme théorique (F0) étant représentative de la forme réelle du brut réel avant usinage ;
- une forme théorique de l'outil réel (12) déterminée au moins à partir des données de correction de géométrie (20) de l'outil également utilisées par le contrôleur physique (18) lors de l'exécution dudit programme d'usinage (19) par le contrôleur physique (18), cette forme théorique (F0) de l'outil réel (12) étant au moins partiellement représentative de la forme réelle de l'outil réel (12) ; et
- une trajectoire théorique simulée représentative du déplacement de l'outil réel (12) par rapport au brut réel (13) si le programme (19) était exécuté par le contrôleur physique (18), cette trajectoire théorique simulée étant calculée par le contrôleur virtuel (26) exécutant ledit programme d'usinage (19) à l'aide desdites données de correction de la géométrie (20) de l'outil réel.

## Patentansprüche

1. Bearbeitungssystem (10), umfassend eine Bearbeitungsmaschine (11), die umfasst:
- mindestens ein reales Werkzeug (12) zur Bearbeitung eines realen Werkstücks (13);
- eine Vielzahl von Aktoren (14), die ausgebildet sind, um eine relative Verschiebung des genannten mindestens einen realen Werkzeugs (12) in Bezug auf einen zu bearbeitenden realen Rohling (13) zu erzeugen, um das reale Werkstück (13) auszubilden;
- eine Vielzahl von Sensoren (15), um Positionsdaten (16) zu erzeugen, die repräsentativ für eine aktuelle Position des realen Werkzeugs (12) in Bezug auf ein reales Maschinenbezugssystem (R) sind;
- einen Speicher (17), in dem Geometriekorrekturdaten (20) zur Korrektur der Geometrie des realen Werkzeugs (12) gespeichert sind;
- einen physischen Controller (18), der ausgebildet ist, um ein Bearbeitungsprogramm (19) auszuführen und die Aktoren (14) gemäß Anweisungen, die in dem Bearbeitungsprogramm (19) enthalten sind, und in Abhängigkeit von zumindest einigen der Geometriekorrekturdaten (20) zur Korrektur der Geometrie des realen Werkzeugs (12) zu steuern, damit sie das genannte mindestens eine reale Werkzeug (12) in dem realen Maschinenbezugsystem (R) in Bezug auf den realen Rohling (13) derart verschieben, dass dieser reale Rohling (13) bearbeitet wird, um das reale Werkstück (13) auszubilden, wobei das Bearbeitungssystem Bediener-Informationsmittel (21) umfasst, die mit dem physischen Controller (18) verbunden sind, um einige der Daten (22) zu empfangen, die repräsentativ sind für:
- die aktuelle Position des realen Werkzeugs (12) in dem realen Bezugssystem (R); und
- die aktuelle Position des realen Rohlings (13) in diesem realen Bezugssystem (R);
wobei diese Informationsmittel (21) ferner Mittel (23) umfassen, um eine Folge aktueller Positionen des realen Werkzeugs (12) in dem realen Bezugssystem (R) zu speichern, sowie Bildanzeigemittel (24), **dadurch gekennzeichnet, dass** diese Anzeigemittel (24) ausgebildet sind, um mindestens ein rekonstruiertes Bild (25) zu erzeugen und anzuzeigen, das anhand der genannten Daten (22) rekonstruiert wird, die repräsentativ für die Positionen des realen Werkzeugs (12) und des realen Rohlings (13) in diesem realen Bezugssystem (R) sind, wobei dieses rekonstruierte Bild (25) repräsentativ ist für:
- die Form des realen Rohlings (13) zu einem gegebenen Zeitpunkt während der Bearbeitung; und
- die Position des realen Werkzeugs (12) in Bezug auf diesen realen Rohling (13) zu diesem gegebenen Zeitpunkt;
wobei das Bearbeitungssystem (10) ferner Mittel zur Erzeugung eines Alarms im Falle eines Eindringens einer rekonstruierten theoretischen Bahn (Tj) des realen Werkzeugs (12) in eine vorbestimmte begrenzte Zone umfasst, die sich um eine virtuelle Fläche erstreckt, die repräsentativ für das reale Werkstück ist, das man am Ende der Bearbeitung erhalten will, wobei diese rekonstruierte theoretische Bahn (Tj) mit Hilfe der genannten Folge von aktuellen Positionen des realen Werkzeugs (12) in dem realen Bezugssystem (R) berechnet wird.

2. Bearbeitungssystem (10) nach Anspruch 1, wobei das Bearbeitungssystem (10) ferner umfasst:
- einen virtuellen Controller (26), der mit dem genannten physischen Controller (18) über Kommunikationsmittel (27) zur Kommunikation zwischen diesen Controllern (18, 26) verbunden ist, wobei der virtuelle Controller (26) ausgebildet ist, um den Betrieb des physischen Controllers (18), welcher das genannte Bearbeitungsprogramm (19) ausführt, zu simulieren, wobei diese Simulation das genannte Bearbeitungsprogramm (19) und die Geometriekorrekturdaten (20) zur Korrektur der Geometrie des Werkzeugs berücksichtigt, die ebenfalls von dem physischen Controller (18) während der Ausführung des genannten Bearbeitungsprogramms (19) durch den physischen Controller (18) verwendet werden;
- die Bediener-Informationsmittel (21) ebenfalls mit dem virtuellen Controller (26) verbunden und ausgebildet sind, um an den Bediener Informationen zu übertragen, die aus der Simulation des Betriebs des physischen Controllers durch den virtuellen Controller (26) stammen, wobei die genannten Bildanzeigemittel (24) ferner ausgebildet sind, um anhand der aus der Simulation stammenden Informationen ein sogenanntes simuliertes Bild (28) zu erzeugen, das sich von dem rekonstruierten Bild (25) unterscheidet, wobei dieses simulierte Bild (28) ebenfalls repräsentativ ist für:
- die Form des realen Rohlings (13) zu einem gegebenen Zeitpunkt während der Bearbeitung; und
- die Position des realen Werkzeugs (12) in Bezug auf diesen realen Rohling (13) zu diesem gegebenen Zeitpunkt.

3. System nach einem der Ansprüche 1 oder 2, bei dem die Anzeigemittel (24) ferner ausgebildet sind, um das rekonstruierte Bild (25) zu erzeugen, indem verwendet werden:
- eine theoretische Form des Rohlings vor der Bearbeitung, wobei diese theoretische Form repräsentativ für die reale Form des realen Rohlings (13) vor der Bearbeitung ist;
- eine theoretische Form (F0) des realen Werkzeugs (12), die zumindest anhand der Geometriekorrekturdaten (20) zur Korrektur der Geometrie des Werkzeugs bestimmt wird, die ebenfalls von dem physischen Controller (18) während der Ausführung des genannten Bearbeitungsprogramms (19) durch den physischen Controller (18) verwendet werden, wobei diese theoretische Form des realen Werkzeugs (12) zumindest teilweise repräsentativ für die reale Form des realen Werkezugs (12) ist; und
- die genannte rekonstruierte theoretische Bahn (Tj).

4. System (10) nach Anspruch 3, bei dem die Anzeigemittel (24) ausgebildet sind, um das genannte rekonstruierte Bild (25) zu erzeugen, das repräsentativ für die Form des realen Rohlings (13) zu einem gegebenen Zeitpunkt ist:
- indem Zonen (Zi) der theoretischen Form (F0) des Rohlings vor der Bearbeitung bestimmt werden, die sich bis zu diesem gegebenen Zeitpunkt (t1) der Bearbeitung auf der rekonstruierten theoretischen Bahn (Tj) der Verschiebung des realen Werkzeugs (12) befinden, wobei diese Zonen (Zi) Schnittpunktzonen (Zi) genannt werden; und
- indem von der theoretischen Form (F0) des Rohlings vor der Bearbeitung alle diese Schnittpunktzonen (Zi) abgezogen werden, sodass das so erzeugte rekonstruierte Bild (25) repräsentativ für die Form des realen Rohlings (13) zum gegebenen Zeitpunkt (t1) der Bearbeitung ist.

5. System nach einem der Ansprüche 1 bis 4, bei dem das System (10) Mittel aufweist, die es dem Nutzer ermöglichen, den genannten gegebenen Zeitpunkt (t1) der realen Bearbeitung auszuwählen, für den er den Erhalt eines rekonstruierten Bildes (25) wünscht, das repräsentativ für diese Bearbeitung zu dem genannten vergangenen ausgewählten gegebenen Zeitpunkt ist.

6. System nach einem der Ansprüche 1 bis 5, bei dem die Bildanzeigemittel (24) ausgebildet sind, um eine visuelle Animation zu erzeugen, die repräsentativ für zumindest einen Teil der Bearbeitung ist, und wobei das genannte angezeigte Bild (25, 28) aus dieser Animation extrahiert wird.

7. System nach einem der Ansprüche 1 bis 6, bei dem das System (10) Auswahlmittel zum Auswählen eines Standortes umfasst, der verwendet wird, um das angezeigte Bild (25, 28) zu erzeugen, wobei diese Auswahlmittel ferner ausgebildet sind, um die Art der Darstellung, die verwendet werden soll, um das angezeigte Bild zu erzeugen, auszuwählen unter:
- einer Perspektivdarstellung; und/oder
- einer Schnittdarstellung gemäß einer Schnittebene, die von dem Bediener gewählt wird; und/oder
- einer Darstellung, die ein Bild des realen Werkzeugs umfasst, das in Bezug auf den realen Rohling (13) während der Bearbeitung positioniert ist; und/oder
- einer Darstellung, die ein Bild des realen Werkzeugs umfasst, das in Bezug auf den realen Rohling während der Bearbeitung und in Bezug auf eine Maschinenumgebung um dieses Werkzeug und den Rohling herum positioniert ist.

8. System nach einem der vorhergehenden Ansprüche, kombiniert mit Anspruch 2, bei dem die Bediener-Informationsmittel (21) Mittel umfassen, um das angezeigte simulierte Bild (28) in Abhängigkeit von der Anweisung des Bearbeitungsprogramms (19), das von dem physischen Controller (18) ausgeführt wird, in der Phase einzustellen, wobei diese Mittel zum Einstellen der Phase ausgebildet sind, damit das angezeigte simulierte Bild (28) repräsentativ für einen Bearbeitungsvorgang des realen Rohlings (13) ist, der von dem realen Werkzeug (12) in Antwort auf die Ausführung einer Anweisung durch den physischen Controller (18), die von diesem physischen Controller (18) in der Zukunft auszuführen ist, durchgeführt werden sollte.

9. System nach einem der Ansprüche 1 bis 8, bei dem die genannten Alarmerzeugungsmittel ebenfalls ausgebildet sind, um den Alarm zu erzeugen, im Falle:
- einer Erfassung eines Bearbeitungsvorfalls, wie zum Beispiel einer Erfassung eines Bruchs des realen Werkzeugs (12), einer Erfassung abnormaler Vibrationen eines Elements des Bearbeitungssystems (10), einer Erfassung einer Verschiebung des realen Werkzeugs (12) außerhalb eines vorbestimmten Raums eines autorisierten Vorhandenseins des realen Werkzeugs, einer Erfassung einer Öffnung einer Sicherheitstür der Bearbeitungsmaschine; und/oder
- einer Erfassung eines Befehls zum Anhalten der Bearbeitung, der von dem Bediener über eine manuelle Steuerung gegeben wird.

10. System nach den Ansprüchen 8 und 9, bei dem bei fehlender Erzeugung eines Alarms während des Ablaufs der Bearbeitung die Anzeigemittel (24) das simulierte Bild (28) anzeigen, das mit Hilfe der genannten Mittel zum Einstellen der Phase des angezeigten simulierten Bildes in Abhängigkeit von der Anweisung des Bearbeitungsprogramms (19), das von dem physischen Controller (18) ausgeführt wird, in der Phase eingestellt ist.

11. System nach Anspruch 10, bei dem die Informationsmittel (21) ausgebildet sind, um das rekonstruierte Bild (25) anzuzeigen, sobald ein Alarm während des Ablaufs der Bearbeitung erzeugt wird, und um dem Bediener zu gestatten, in einen manuellen Steuermodus überzugehen, in dem er die Aktoren (14) steuert, das reale Werkzeug (12) in Bezug auf den realen Rohling (13) zu verschieben, unter Verwendung von manuellen Steuermitteln, wie z. B. eines Steuerhebels und/oder Steuertasten, wobei das angezeigte rekonstruierte Bild (25) repräsentativ ist für:
- die Form des realen Rohlings (13) während der Bearbeitung zu dem Zeitpunkt, zu dem der Bediener manuell die Verschiebung des realen Werkzeugs in Bezug auf den realen Rohling steuert; und
- die Position des realen Werkzeugs in Bezug auf diesen realen Rohling zu diesem selben Zeitpunkt.

12. System nach einem der vorhergehenden Ansprüche, kombiniert mit Anspruch 2, bei dem die Anzeigemittel (24) ferner ausgebildet sind, um das simulierte Bild (28) zu erzeugen, indem verwendet werden:
- eine theoretische Form (F0) des Rohlings vor der Bearbeitung, wobei diese theoretische Form (F0) repräsentativ für die reale Form des realen Rohlings vor der Bearbeitung ist;
- eine theoretische Form des realen Werkzeugs (12), die zumindest anhand der Geometriekorrekturdaten (20) zur Korrektur der Geometrie des Werkzeugs bestimmt wird, die ebenfalls von dem physischen Controller (18) während der Ausführung des Bearbeitungsprogramms (19) durch den physischen Controller (18) verwendet werden, wobei diese theoretische Form (F0) des realen Werkzeugs (12) zumindest teilweise repräsentativ für die reale Form des realen Werkzeugs (12) ist; und
- eine simulierte theoretische Bahn, die repräsentativ für die Verschiebung des realen Werkzeugs (12) in Bezug auf den realen Rohling (13) ist, wenn das Programm (19) von dem physischen Controller (18) ausgeführt worden wäre, wobei diese simulierte theoretische Bahn von dem virtuellen Controller (26) berechnet wird, der das genannte Bearbeitungsprogramm (19) mit Hilfe der genannten Geometriekorrekturdaten (20) zur Korrektur der Geometrie des realen Werkzeugs ausführt.

## Claims

1. A machining system (10) comprising a machining tool (11) comprising:
• at least one real tool (12) for machining a real part (13);
• a plurality of actuators (14) arranged to cause said at least one real tool (12) to move relative to a real blank (13) for machining in order to form the real part (13);
• a plurality of sensors (15) for generating positioning data (16) representative of a current position of the real tool (12) relative to a real machine reference frame (R);
• a memory (17) storing shape correction data (20) for the real tool (12); and
• a physical controller (18) arranged to execute a machining program (19) and to control the actuators (14) in compliance with instructions contained in the machining program (19) and as a function of at least some of the shape correction data (20) for the real tool (12), so as to move said at least one real tool (12) in the real machine reference frame (R) relative to the real blank (13) in such a manner as to machine the real blank (13) in order to form the real part (13);
the system being **characterized in that** operator information means (21) are connected to the physical controller (18) in order to receive data (22) representative:
• of the current position of the real tool (12) in the real reference frame (R); and
• of the current position of the real blank (13) in the real reference frame (R);
the information means (21) further including memory means (23) for storing a succession of current positions of the real tool (12) in the real reference frame (R) and image display means (24) and, **characterized in that** the image display means (24) are arranged to generate and display at least one reconstituted image (25) that is reconstituted on the basis of said data (22) representative of the positions of the real tool (12) and of the real blank (13) in the real reference frame (R), the reconstituted image (25) being representative:
• of the shape at a given instant of the real blank (13) being machined; and
• of the position at the given instant of the real tool (12) relative to the real blank (13);
the machining system (10) further including means for generating an alarm in the event of a reconstituted theoretical path (Tj) of the real tool (12) penetrating into a predetermined limit zone extending around a virtual surface representative of the real part that it is desired to obtain at the end of machining, the reconstituted theoretical path (Tj) being calculated using said succession of current positions of the real tool (12) in the real reference frame (R).

2. A machining system (10) according to claim 1, wherein the machining system (10) further comprises:
• a virtual controller (26) connected to said physical controller (18) by communications means (27) between the controllers (18, 26), the virtual controller (26) being arranged to simulate the operation of the physical controller (18) executing said machining program (19), the simulation taking account of said machining program (19) and of the shape correction data (20) for the tool that is also used by the physical controller (18) while the physical controller (18) is executing said machining program (19); and
• the operator information means (21) are also connected to the virtual controller (26) and they are arranged to transmit information to the operator, which information comes from the simulation by the virtual controller (26) of the operation of the physical controller, said image display means (24) also being arranged to use the information coming from the simulation to generate a simulated image (28) that is distinct from the reconstituted image (25), the simulated image (28) likewise being representative:
• of the shape at a given instant of the real blank (13) being machined; and
• of the position at the given instant of the real tool (12) relative to the real blank (13).

3. A system according to claim 1 or claim 2, wherein the display means (24) are also arranged to generate the reconstituted image (25) by making use of:
• a theoretical shape for the blank before machining, the theoretical shape being representative of the real shape of the real blank (13) before machining;
• a theoretical shape (F0) for the real tool (12) determined at least on the basis of shape correction data (20) for the tool that is also used by the physical controller (18) during its execution of said machining program (19), the theoretical shape for the real tool (12) being representative at least in part of the real shape of the real tool (12); and
• said reconstituted theoretical path (Tj).

4. A system (10) according to claim 3, wherein the display means (24) are arranged to generate said reconstituted image (25) representative of the shape at a given instant of the real blank (13):
• by determining zones (Zi) of the theoretical shape (F0) for the blank prior to machining that, up to this given instant (t1) of the machining, have been found to lie on the reconstituted theoretical path (Tj) for the movement of the real tool (12), these zones (Zi) being referred to as intersection zones (Zi); and
• by subtracting all of these intersection zones (Zi) from the theoretical shape (F0) of the blank prior to machining, so that the reconstituted image (25) as generated in this way is representative of the shape of the real blank (13) at the given instant (t1) of the machining.

5. A system according to any one of claims 1 to 4, wherein the system (10) presents means enabling the user to select said given instant (t1) of the real machining for which the user desires to obtain a reconstituted image (25) representative of the machining at said selected given instant in the past.

6. A system according to any one of claims 1 to 5, wherein the image display means (24) are arranged to generate a visual animation representative of at least a portion of the machining, with said displayed image (25, 28) being extracted from the animation.

7. A system according to any one of claims 1 to 6, wherein the system (10) includes selection means for selecting a viewpoint used for generating the displayed image (25, 28), the selection means also being arranged to select the type of representation that is to be used for generating the displayed image from among:
• a perspective representation; and/or
• a section representation on a section plane selected by the operator; and/or
• a representation comprising an image of the real tool in position relative to the real blank (13) being machined; and/or
• a representation comprising an image of the real tool positioned relative to the real blank being machined and relative to a machine environment around the tool and the blank.

8. A system according to any preceding claim in combination with claim 2, wherein the operator information means (21) include phasing means for adjusting the phase of the displayed simulated image (28) as a function of the machining program instruction (19) that is being executed by the physical controller (18), these phasing means being arranged so that the displayed simulated image (28) is representative of a machining operation on the real blank (13) that ought to be performed by the real tool (12) in response to the physical controller (18) executing an instruction that ought to be executed in the future by the physical controller (18).

9. A system according to any one of claims 1 to 8, wherein the means for generating an alarm are arranged to generate said alarm in the event:
• of a machining incident being detected such as detecting breakage of the real tool (12), detecting abnormal vibration of an element of the machining system (10), detecting movement of the real tool (12) outside a predetermined space authorized for presence of the real tool, and detecting opening of a safety gate of the machining tool; and/or
• of detecting an order to stop machining issued by the operator acting on a manual control.

10. A system according to claims 8 and 9, wherein, in the absence of an alarm being generated while machining is taking place, the display means (24) display the simulated image (28) at a phase set by using said phasing means for phasing the displayed simulated image as a function of the instruction (19) of the machining program that is being executed by the physical controller (18).

11. A system according to claim 10, wherein the information means (21) are arranged to display the reconstituted image (25) as soon as an alarm is generated while machining is taking place, and to authorize the operator to pass to a manual control mode in which the operator controls the actuators (14) to move the real tool (12) relative to the real blank (13) using manual control means such as a control joystick and/or control key, the displayed reconstituted image (25) being representative:
• of the shape of the real blank (13) being machined at the instant when the operator controls movement of the real tool manually relative to the real blank; and
• of the position of the real tool relative to the real blank at that instant.

12. A system according to any preceding claim in combination with claim 2, wherein the display means (24) are also arranged to generate the simulated image (28) by making use of:
• a theoretical shape (F0) for the blank before machining, the theoretical shape (F0) being representative of the real shape of the real blank before machining;
• a theoretical shape for the real tool (12) determined at least on the basis of shape correction data (20) for the tool that is also used by the physical controller (18) during its execution of said machining program (19), the theoretical shape (F0) for the real tool (12) being representative at least in part of the real shape of the real tool (12); and
• a simulated theoretical path representative of the movement of the real tool (12) relative to the real blank (13) as if the program (19) were executed by the physical controller (18), this simulated theoretical path being calculated by the virtual controller (26) executing said machining program (19) using said shape correction data (20) for the real tool.
